# EUROPEAN PATENT APPLICATION

(11) **EP 4 234 980 A1**
(43) Date of publication of application: **30.08.2023**
(21) Application number: 21926313.4
(22) Date of filing: 14.10.2021
(51) Int. Cl.: F16H 55/08, F16H 55/17, F16H 49/00

(54) **FLEXIBLE WHEEL AND HARMONIC REDUCER COMPRISING SAME**

(30) Priority: 22.02.2021 CN 202110202751
(71) Applicant: Gree Electric Appliances, Inc. of Zhuhai, Zhuhai, Guangdong 519070 (CN)
(72) Inventor: GUO, Shuang, Zhuhai, Guangdong 519070 (CN); WU, Xiaocui, Zhuhai, Guangdong 519070 (CN); PENG, Xiangnan, Zhuhai, Guangdong 519070 (CN); XU, Jiakui, Zhuhai, Guangdong 519070 (CN); XIAO, Wei, Zhuhai, Guangdong 519070 (CN); ZOU, Xiaobing, Zhuhai, Guangdong 519070 (CN)
(74) Representative: Appleyard Lees IP LLP
(86) International application number: PCT/CN2021/123790
(87) International publication number: WO 2022/174599

(57) **Abstract**

A flexible wheel (1) and a harmonic reducer comprising same. The flexible wheel (1) comprises: a flexible wheel body (11); the flexible wheel body (11) is configured to have a cylindrical structure; a toothed portion (12) is formed at a first end of the flexible wheel body (11); a plurality of outer teeth (121) are formed on the outer wall of the toothed portion (12) in a circumferential direction thereof; a reinforcing structure is provided between two adjacent outer teeth (121); and the reinforcing structure comprises a plurality of arc segments to increase the thickness of a portion between the two outer teeth (121).

## Description

### CROSS-REFERENCE TO RELATED APPLICATIONS

The present application claims priority to Chinese patent application No. 202110202751.1, filed on February 22, 2021, the entire contents of which are incorporated herein by reference.

### TECHNICAL FIELD

The present application relates to the field of harmonic reducers, and in particular, to a flexible wheel and a harmonic reducer including the same.

### BACKGROUND

With the transformation and upgrading of intelligent manufacturing, higher precision and reliability requirements have been put forward for the high-precision transmission of harmonic reducers in industrial robots. As one of the core components of robot transmission, the harmonic reducer has the characteristics of small volume, large reduction ratio, large number of engagement teeth, smooth transmission, high bearing capacity, and high transmission accuracy compared with other reducers, and thus the harmonic reducer is widely used in aerospace, military, industrial robots and other areas. At present, the main problem that restricts the development of harmonic reducer industry is a service life issue. Fracture of a tooth root and tearing at a flange of a flexible wheel are the main reasons for the failure of the harmonic reducer, and damage to these two areas always occurs when a tooth shape and a flange structure size of the flexible wheel are changed.

Targeted structural designs have been carried out in the industry for tooth shaped structures, R-angle connections between cylinders and flanges, etc., but the flexible wheel is still the weakest link of the harmonic reducer. Targeted structural design was carried out on the curvature radius R at a bending part in some harmonic reducers, but it still cannot solve the problem of the fracture of the tooth root of the flexible wheel.

### SUMMARY

Based on this, the present application provides a flexible wheel and a harmonic reducer including the same, for solving at least the technical problem of easy fracture of the tooth root of the flexible wheel in the related art.

In a first aspect, the present application provides a flexible wheel, including:
a flexible wheel body configured to have a cylindrical structure; and
a toothed portion formed at an end of the flexible wheel body, a plurality of outer teeth being formed on an outer wall of the toothed portion in a circumferential direction of the outer wall, a reinforcing structure being arranged between two adjacent outer teeth, and
the reinforcing structure including a plurality of arc segments to increase a thickness of a portion between the two outer teeth.

Further optionally, the reinforcing structure includes a raised arc and an outer transition arc,
the raised arc is arranged between the two outer teeth and protrudes from an outer peripheral surface of the flexible wheel body, and
an outer transition arc is arranged at both sides of the raised arc such that a smooth curved surface is formed between the raised arc and the two outer teeth.

Further optionally, the flexible wheel body is provided with a first end and a second end, the toothed portion is arranged at the first end of the flexible wheel body, a flange is arranged at the second end of the flexible wheel body, and
the flange is in an annular structure and connected to the second end of the flexible wheel body by an annular flange wall.

Further optionally, a thickness at a position of the outer transition arc is L1, and a thickness of the flange wall is L2,
wherein a value of L1 is 1.5 to 1.8 times of a value of L2.

Further optionally, a radius of the outer transition arc is R1, and an arc radius of an end the outer tooth at an engagement position is R2, and
wherein R1<R2.

Further optionally, a center of the raised arc is located on a same straight line as a center of a root circle of the outer teeth and a center of the flexible wheel body.

Further optionally, a radius of the raised arc is R0, and R1<R2<R0.

In a second aspect, the present application provides a harmonic reducer, including:
a steel wheel configured to have a circular structure, a plurality of inner teeth being formed on an inner wall of the steel wheel in a circumferential direction; and
the above flexible wheel, the steel wheel being sleeved on the flexible wheel and the inner teeth being engaged with the outer teeth,
wherein a number of the inner teeth is greater than a number of the outer teeth.

Further optionally, a crest of the inner teeth is provided with an inner concave arc and an inner transition arc,
there are two inner transition arcs, the two inner transition arcs are respectively arranged on both sides of the inner concave arc,
a position of the inner concave arc corresponds to a position of the raised arc, and a position of the inner transition arc corresponds to a position of the outer transition arc.

Further optionally, a radius of the inner concave arc is greater than or equal to a radius of the raised arc, and/or
a radius of the inner transition arc is greater than or equal to a radius of the outer transition arc.

In the present application, the reinforcing structure is arranged between two adjacent outer teeth of a flexible wheel, that is, at a position with the thinnest thickness, to increase the thickness at the position. The reinforcement structure is specifically designed as a raised smooth transition three-section arc structure, which optimizes the thinnest position of the toothed portion, increases a thickness of the tooth root, and improves a load-bearing strength of the toothed portion of the harmonic flexible wheel, thereby improving a service life of the harmonic reducer. The present application can improve strength of the toothed portion of the flexible wheel and increase a service life of the flexible wheel, thus making the harmonic reducer have a longer service life and better reliability.

### BRIEF DESCRIPTION OF THE DRAWINGS

The above and other objects, features and advantages of the present application will become more apparent by a detailed description of exemplary embodiments thereof with reference to the accompanying drawings. The accompanying drawings in the following description shows merely some embodiments of the present application, and do not constitute a limitation to scope of the present application, for those of ordinary skill in the art, other drawings can also be obtained according to these accompanying drawings without any creative effort.
FIG. 1 is a schematic diagram illustrating a configuration of a flexible wheel of the present application.
FIG. 2 is a schematic diagram illustrating a section of the flexible wheel of the present application.
FIG. 3 is a schematic diagram illustrating a configuration of a part of outer teeth of the flexible wheel of the present application.
FIG. 4 is a schematic diagram illustrating a partial enlarged detail of the outer teeth.
FIG. 5 is a schematic diagram illustrating a configuration of a steel wheel of the present application.
FIG. 6 is a schematic diagram illustrating a configuration of a part of inner teeth.
FIG. 7 is a schematic diagram illustrating a state where the inner teeth are engaged with the outer teeth.

In the accompanying drawings:
1: flexible wheel; 11: flexible wheel body; 12: toothed portion; 121: outer teeth; 122: raised arc; 123: outer transition arc; 13: flange; 131: flange wall; 2: steel wheel; 21: inner teeth; 22: inner concave arc; and 23: inner transition arc.

### DETAILED DESCRIPTION OF THE EMBODIMENTS

In order to make the purpose, technical solutions and advantages of embodiments of the present application more clearly understood, the technical solutions in the embodiments will be described clearly and completely below with reference to the accompanying drawings in the embodiments. Obviously, the described embodiments are a part of the embodiments of the present application and not all of them. Based on the embodiments in the present application, all other embodiments obtained without creative labor by a person of ordinary skill in the art fall within the scope of protection of the present application.

The terms used in embodiments of the present application are used solely for the purpose of describing particular embodiments and are not intended to limit the present application. The singular forms "a", "the" and "this" as used in embodiments of the present application and the appended claims are also intended to include most forms, unless the context clearly indicates otherwise, and "more than one" generally includes at least two, but does not exclude the inclusion of at least one.

It should be understood that the term "and/or" as used herein is simply a description of the association of related objects, indicating that three types of relationships can exist, for example, A and/or B, which can mean: A alone, both A and B, and B alone. In addition, the character "j" in present application generally indicates an "or" relationship between the front and back associated objects.

It is also important to note that the terms "includes", "comprises" or any other variation thereof are intended to cover non-exclusive inclusion, so that a product or system that includes a range of elements includes not only those elements, but also other elements that are not explicitly listed, or also include elements inherent to such a product or system. Without further limitation, the elements limited by the statement "including a ......" do not preclude the existence of another identical elements in the product or system that includes the elements.

In the present application, a reinforcing structure is arranged between two adjacent outer teeth of a flexible wheel, that is, at a position with the thinnest thickness, to increase the thickness at the position. The reinforcement structure is specifically designed as a raised smooth transition three-section arc structure, which optimizes the thinnest position of a toothed portion, increases a thickness of a tooth root, and improves a load-bearing strength of the toothed portion of the harmonic flexible wheel, thereby improving a service life of a harmonic reducer. The steel wheel of the harmonic reducer is designed to adopt a concave smooth transition three-section arc structure matching the flexible wheel to ensure that there is no interference when the steel wheel is engaged with the above-mentioned flexible wheel. Meanwhile, a concave tooth groove forms an oil storage position to ensure that lubrication at a position where the steel wheel is engaged with the flexible wheel is more sufficient. The present application will be described in detail below with reference to specific embodiments.

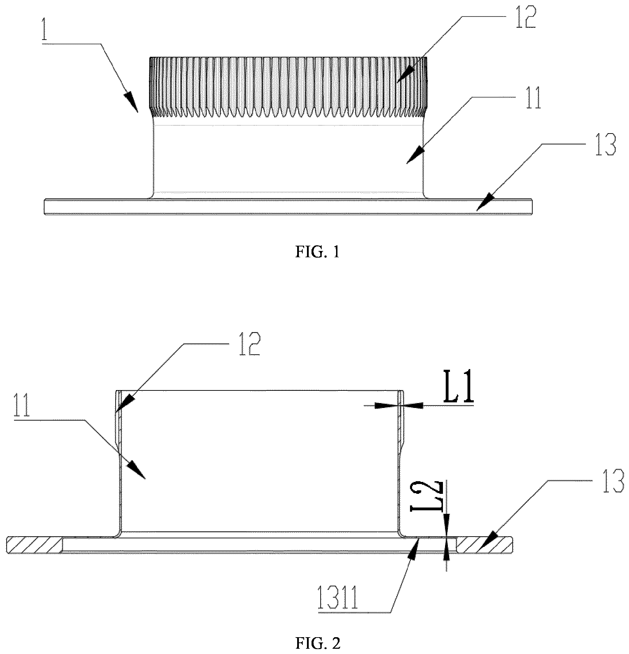

As shown in FIGS. 1 and 2, the present application provides a flexible wheel 1, including:
a flexible wheel body 11 configured to have a cylindrical structure, and
a toothed portion 12 formed by a first end of the flexible wheel body 11. A plurality of outer teeth are formed on an outer wall of the toothed portion 12 in a circumferential direction of the outer wall, and a reinforcing structure is arranged between two adjacent outer teeth.

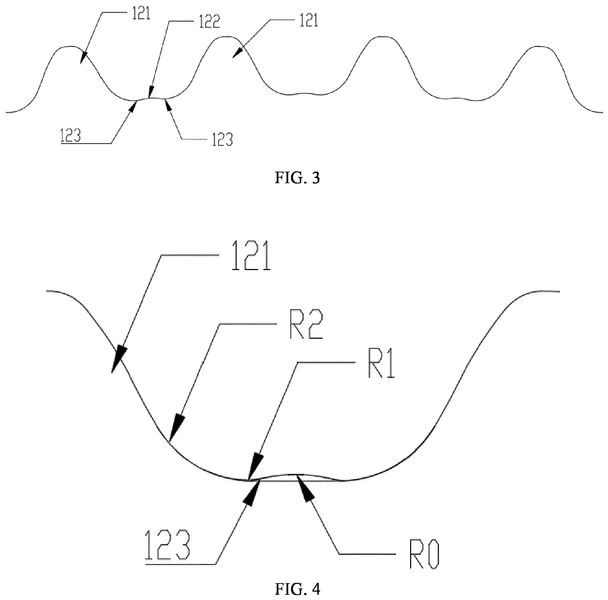

As shown in FIGS. 3 and 4, the reinforcing structure includes a plurality of arc segments to increase a thickness of a portion between the two outer teeth.

Specifically, the reinforcing structure includes a raised arc 122 and an outer transition arc 123. The raised arc 122 is arranged at a middle position between the two outer teeth and is raised in a radial direction of the flexible wheel body 11 to increase the thickness of the portion between the two outer teeth. There are two outer transition arcs 123, and the two outer transition arcs 123 are respectively arranged on both sides of the raised arc 122 to form a three-section arc structure, such that a smooth surface is formed between the raised arc 122 and the two outer teeth to avoid stress concentration.

A flange 13 is arranged at a second end of the flexible wheel body 11, and the flange 13 is in an annular structure and connected to the second end of the flexible wheel body 11 by an annular flange wall 131. A thickness of the flange wall 131 in an axial direction of the flexible wheel body 11 is L2, and a thickness at a position of the outer transition arc 123 is L1, which is a thickness of the thinnest part of the toothed portion 12. In a specific embodiment, a value of L1 is 1.5 to 1.8 times of a value of L2. A tooth root of the flexible wheel 1 is close to an engagement position, and an upper end of the flexible wheel 1 is in an open structure. A radial rotational force transformed from an axial rotational force is applied on the flange wall 131, with a complicated force situation. Since the flange 13 serves as a connection between the flexible wheel body 11 and the flange 13 and transmission of a torque, the thickness L2 of the flange wall 131 is generally determined first, and then the thickness L1 of the tooth root is increased as much as possible according to the above-mentioned limited relationship while ensuring the performance of a harmonic reducer, thus improving a service life of the flexible wheel 1. According to the above structure limitation, service lives of the tooth root and the flange can be improved as the flexible and reasonable deformation of the outer teeth can be guaranteed.

A radius of the raised arc 122 is R0 and a center of the raised arc 122 is located on a line connecting a center of a root circle of the outer teeth and a center of a center circle of the flexible wheel 1. Both ends of the outer transition arc 123 connect engagement positions of the outer teeth. The use of the raised arc 122 significantly increases the thickness of the tooth root. However, this design also leads to a shift of the thinnest part of the tooth root from a center to connection points on both sides, which will lead to stress concentration if the connection is not smooth. A radius of the outer transition arc 123 is R1 and an arc radius of an end the outer tooth at an engagement position is R2, where R1<R2<R0. In this embodiment, the outer transition arc 123 is used to connect the raised arc 122 and the engagement positions of the outer teeth. Due to the structural characteristics of the outer transition arc 123, a relationship between the radius R1 of the outer transition arc 123 and the arc radius R2 of the end of the outer tooth at the engagement position is R1<R2. Moreover, when different values are chosen for R1 of the outer transition arc 123, its thinnest part on both sides changes, and as the value of R1 increases, the thinnest part on both sides thickens, so a larger value of R1 is preferred for increasing the thickness of the tooth root in the present application.

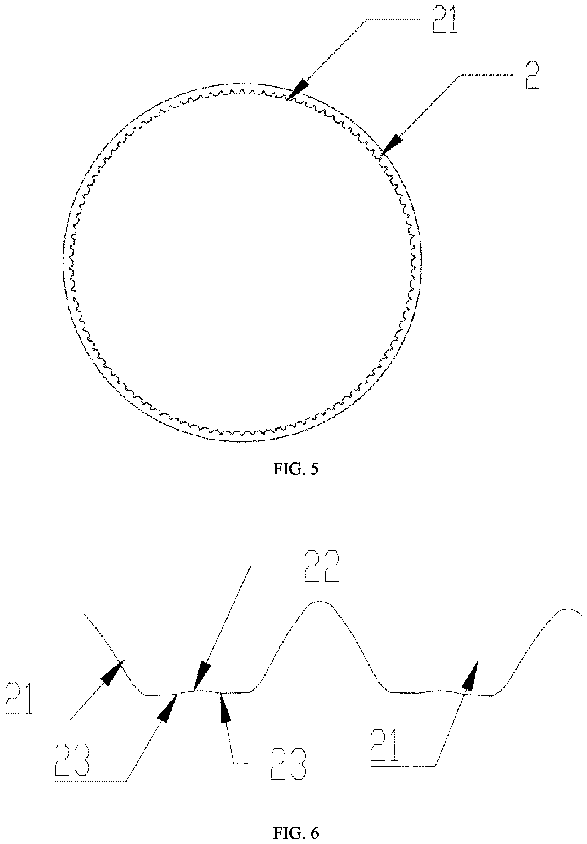

The present application further provides a harmonic reducer, including the above flexible wheel 1 and a steel wheel 2 configured to have a circular structure. As shown in FIG. 5, a plurality of inner teeth 21 are formed on an inner wall of the steel wheel 2 in a circumferential direction. The steel wheel 2 is sleeved on the flexible wheel 1 and the inner teeth 21 are engaged with the outer teeth. A number of the inner teeth 21 is greater than a number of the outer teeth.

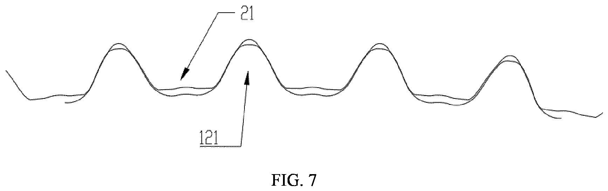

As shown in FIGS. 6 and 7, a crest of the inner teeth 21 is provided with an inner concave arc 22 and an inner transition arc 23. There are two inner transition arcs 23, and the two inner transition arcs 23 are respectively arranged on both sides of the inner concave arc 22. A position of the inner concave arc 22 corresponds to a position of the raised arc 122, and a position of the inner transition arc 23 corresponds to a position of the outer transition arc 123 to ensure that there is no interference when the steel wheel 2 is engaged with the flexible wheel 1. Meanwhile, the inner concave arc 22 forms an oil storage position, which can accommodate a certain amount of lubricating oil, ensuring sufficient lubrication at a position where the steel wheel 2 is engaged with the flexible wheel 1.

As shown in FIG. 7, the crest of the inner teeth 21 has good rigidity and is not in a direct engagement position. When the diameter of the concave arc of the crest of the inner teeth 21 is selected to be greater than or equal to the radius of the raised arc 122 of the flexible wheel 1, clearance position gradually increases, and the radius of the inner transition arc on both sides is also greater than the radius of the outer transition arc of the flexible wheel 1, so as to ensure adequate clearance and oil storage lubrication space.

When the flexible wheel 1 is in contact with a long shaft of a hollow shaft, the toothed portion 12 of the flexible wheel 1 is engaged with the inner teeth 21 of the steel wheel 2, where the root of the outer teeth and the crest of the inner teeth 21 have enough clearance position to form the oil storage space.

According to the structural characteristics of the harmonic reducer and the flexible wheel body, the present application designs a new tooth root structure of the flexible wheel and optimizes the crest structure of the steel wheel 2, which can significantly improve the situation that the tooth root of the flexible wheel in the related technical solutions is prone to breakage, thus enhancing operational stability and service life of the harmonic reducer.

Exemplary embodiments of the present disclosure are specifically illustrated and described above. It should be understood that the present disclosure is not limited to the detailed structures, setting methods, or implementation methods described herein. Rather, the present disclosure is intended to cover a variety of modifications and equivalent settings included within the spirit and scope of the appended claims.

## Claims

1. A flexible wheel, **characterized by** comprising:
a flexible wheel body configured to have a cylindrical structure; and
a toothed portion formed at an end of the flexible wheel body, a plurality of outer teeth being formed on an outer wall of the toothed portion in a circumferential direction of the outer wall, a reinforcing structure being arranged between two adjacent outer teeth, and the reinforcing structure comprising a plurality of arc segments to increase a thickness of a portion between the two outer teeth.

2. The flexible wheel of claim 1, **characterized in that** the reinforcing structure comprises:
a raised arc arranged between the two outer teeth and protruding from an outer peripheral surface of the flexible wheel body; and
an outer transition arc arranged at both sides of the raised arc such that a smooth curved surface is formed between the raised arc and the two outer teeth.

3. The flexible wheel of claim 2, **characterized in that**: the flexible wheel body is provided with a first end and a second end, the toothed portion is arranged at the first end of the flexible wheel body, and a flange is arranged at the second end of the flexible wheel body; and
the flange is in an annular structure and connected to the second end of the flexible wheel body by an annular flange wall.

4. The flexible wheel of claim 3, **characterized in that** a thickness at a position of the outer transition arc is L1 and a thickness of the flange wall is L2,
wherein a value of L1 is 1.5 to 1.8 times of a value of L2.

5. The flexible wheel of claim 4, **characterized in that** a radius of the outer transition arc is R1 and an arc radius of an end of the outer tooth at an engagement position is R2,
wherein R 1 <R2.

6. The flexible wheel of claim 5, **characterized in that** a center of the raised arc is located on a same straight line as a center of a root circle of the outer teeth and a center of the flexible wheel body.

7. The flexible wheel of claim 6, **characterized in that** a radius of the raised arc is R0, wherein R1<R2<R0.

8. A harmonic reducer, **characterized by** comprising:
a steel wheel configured to have a circular structure, a plurality of inner teeth being formed on an inner wall of the steel wheel in a circumferential direction; and
the flexible wheel of any one of claims 1 to 7, the steel wheel being sleeved on the flexible wheel and the inner teeth being engaged with the outer teeth,
wherein a number of the inner teeth is greater than a number of the outer teeth.

9. The harmonic reducer of claim 8, **characterized in that** the flexible wheel is configured as the flexible wheel of any one of claims 2 to 7, and
a crest of the inner teeth is provided with an inner concave arc and an inner transition arc,
wherein there are two inner transition arcs, and the two inner transition arcs are respectively arranged on both sides of the inner concave arc, and
wherein a position of the inner concave arc corresponds to a position of the raised arc, and a position of the inner transition arc corresponds to a position of the outer transition arc.

10. The harmonic reducer of claim 9, **characterized in that** a radius of the inner concave arc is greater than or equal to a radius of the raised arc, and/or,
a radius of the inner transition arc is greater than or equal to a radius of the outer transition arc.
